# DEMANDE DE BREVET EUROPEEN

(11) **EP 3 171 519 A1**
(43) Date de publication de la demande: **24.05.2017**
(21) Numéro de dépôt: 16199064.3
(22) Date de dépôt: 16.11.2016
(51) Int. Cl.: H03M 7/30

(54) **DISPOSITIF DE VALIDATION DE COMMUNICATION**

(30) Priorité: 18.11.2015 FR 1502419
(71) Demandeur: BULL SAS, 78340 Les Clayes sous Bois (FR)
(72) Inventeur: LHASNAOUI, Khalid, 78114 Magny-les-Hameaux (FR)
(74) Mandataire: Cabinet Camus Lebkiri

(57) **Abrégé**

Un aspect de l'invention concerne un dispositif (100) de validation de communication comportant :
- un système (M) de stockage de données ;
- une première interface (Int1) de communication ;
- un écran (E) d'affichage ;
- un processeur (P) connecté au système (M) de stockage de données, à la première interface (Int1) de communication et à l'écran (E) d'affichage, le processeur (P) étant configuré pour :
- acquérir un premier message dans un format binaire via la première interface (Int1) de communication ;
- décoder le premier message dans le format binaire conformément à une norme dite « norme H », pour l'obtention d'un premier message décodé dans un format texte ;
- transmettre le premier message décodé dans le format texte à l'écran (E) d'affichage.

## Description

### DOMAINE TECHNIQUE DE L'INVENTION

Le domaine technique de l'invention est celui des systèmes d'information et de communication utilisés dans le cadre des interventions militaires. La présente invention concerne un dispositif de validation de communication.

### ARRIERE-PLAN TECHNOLOGIQUE DE L'INVENTION

Les systèmes d'information et de communication utilisés dans le cadre des interventions militaires doivent typiquement être aptes à utiliser une norme de formatage de messages, appelée « norme H ». Une application de messagerie est associée à la norme H : elle est classiquement désignée comme la messagerie H sur les dispositifs utilisés par les forces déployées. La messagerie H permet une communication par des échanges de messages binaires, de taille réduite de l'ordre de quelques bits. La taille d'un message H est variable. La taille d'un message H peut ainsi être de :
- 6 octets pour un message court de 48 bits,
- 12 octets pour un message long de 96 bits,
- plus de 12 octets pour d'autres types de messages.

Un premier système d'information et de communication au sens du présent document est par exemple le système d'information du combat Scorpion, dit système SICS. Un deuxième système d'information et de communication au sens du présent document est par exemple le système d'information terminal de l'aviation légère de l'armée de Terre, dit système SIT ALAT. Le système SICS et le système SIT ALAT implémentent a priori la norme H.

Il est notamment souhaité de pouvoir vérifier la conformité d'un tel système d'information et de communication avec la norme H. Il est également souhaité de pouvoir valider une communication d'un tel système d'information et de communication.

### EXPOSE DE L'INVENTION

L'invention offre une solution aux problèmes évoqués précédemment, en proposant un dispositif de validation de communication permettant de valider ou au contraire d'invalider une communication d'un système d'information et de communication tel que le système SICS ou le système SIT ALAT.

Un aspect de l'invention concerne ainsi un dispositif de validation de communication comportant :
- un système de stockage de données ;
- une première interface de communication ;
- un écran d'affichage ;
- un processeur connecté au système de stockage de données, à la première interface de communication et à l'écran d'affichage, le processeur étant configuré pour :
   - acquérir un premier message dans un format binaire via la première interface de communication ;
   - décoder le premier message dans le format binaire conformément à une norme dite « norme H », pour l'obtention d'un premier message décodé dans un format texte ;
   - transmettre le premier message décodé dans le format texte à l'écran d'affichage.

Dans le présent document, on entend par « message dans un format binaire » un message dont l'interprétation par un être humain requiert au préalable un traitement effectué par une machine autre qu'un éditeur de texte. Un message dans un format binaire ne peut pas, tel quel, être interprété - c'est-à-dire, être lu et compris - par un être humain. L'unité d'interprétation d'un message dans un format binaire est en général le bit. Un format binaire peut notamment être :
- un flux binaire dans lequel les bits sont lus un par un,
- un flux hexadécimal dans lequel les bits sont lus quatre par quatre,
- un flux d'octets dans lequel les bits sont lus huit par huit, etc.

La liste ci-dessus n'est pas limitative.

Un format binaire est par exemple un format dont les extensions sont :
- l'extension .zip,
- l'extension .pdf,
- l'extension .doc, etc.

Dans le présent document, on entend par « message dans un format texte » un message dont l'interprétation par un être humain est directement possible au moyen d'un simple éditeur de texte, de type « Bloc-notes » ou « Notepad ». Un message dans un format texte ne nécessite aucun traitement préalable par une machine autre qu'un éditeur de texte. L'unité d'interprétation d'un message dans un format texte est l'octet. Un format texte est par exemple :
- le format .txt,
- le format .xml,
- le format json, etc.

Grâce à l'invention, un premier message dans un format binaire, que l'on souhaite valider, est acquis par le processeur au moyen de la première interface de communication. Le premier message dans le format binaire n'est pas intelligible directement par un être humain. Le processeur réalise ensuite à un décodage dudit premier message dans le format binaire. Afin de décoder ledit premier message dans le format binaire, le processeur utilise la norme de formatage de messages appelée « norme H ». Le résultat du décodage effectué par le processeur est un premier message décodé dans un format texte. Le premier message décodé dans le format texte est alors transmis par le processeur à l'écran d'affichage. Le premier message décodé dans le format texte est directement intelligible par un être humain. L'information contenue dans le premier message dans le format binaire peut ainsi être vérifiée et validée par un être humain, au moyen de l'écran d'affichage. Un utilisateur humain peut alors par exemple effectuer une comparaison de l'information contenue dans le premier message avec une information de référence.

Outre les caractéristiques qui viennent d'être évoquées dans le paragraphe précédent, le dispositif de validation de communication selon l'invention peut présenter une ou plusieurs caractéristiques complémentaires parmi les suivantes, considérées individuellement ou selon toutes les combinaisons techniquement possibles :
- Le dispositif de validation de communication comporte une deuxième interface de saisie, le processeur étant connecté à la deuxième interface de saisie et le processeur étant configuré pour acquérir un deuxième message dans le format texte via la deuxième interface de saisie.
- Le processeur est configuré pour :
   - comparer le deuxième message dans le format texte avec le premier message interprété dans le format texte ;
   - transmettre un résultat de la comparaison à l'écran d'affichage.

Le processeur permet alors avantageusement la réalisation d'une comparaison plus rapide, efficace et fiable qu'une comparaison réalisée par un utilisateur humain.
- Le processeur est configuré pour :
   - encoder le deuxième message dans le format texte selon le format binaire pour l'obtention d'un deuxième message dans le format binaire;
   - comparer le premier message dans le format binaire avec le deuxième message dans le format binaire ;
   - transmettre un résultat de la comparaison à l'écran d'affichage.

### BREVE DESCRIPTION DES FIGURES

Les figures sont présentées à titre indicatif et nullement limitatif de l'invention.
- La figure 1a montre schématiquement un dispositif de validation de communication selon un premier mode de réalisation de l'invention.
- La figure 1b montre un diagramme des étapes de fonctionnement du dispositif de validation de communication de la figure 1a.
- La figure 2a montre schématiquement un dispositif de validation de communication selon un deuxième mode de réalisation de l'invention.
- La figure 2b montre un diagramme des étapes d'un premier mode de fonctionnement du dispositif de validation de communication de la figure 2a.
- La figure 2c montre un diagramme des étapes d'un deuxième mode de fonctionnement du dispositif de validation de communication de la figure 2a.
- La figure 2d montre un diagramme des étapes d'un troisième mode de fonctionnement du dispositif de validation de communication de la figure 2a.

### DESCRIPTION DETAILLEE D'AU MOINS UN MODE DE REALISATION DE L'INVENTION

Sauf précision contraire, un même élément apparaissant sur des figures différentes présente une référence unique.

Dans le présent document, ainsi que précédemment expliqué :
- on entend par « message dans un format binaire » un message dont l'interprétation par un être humain requiert au préalable un traitement effectué par une machine autre qu'un éditeur de texte, et
- on entend par « message dans un format texte » un message dont l'interprétation par un être humain est directement possible au moyen d'un simple éditeur de texte, de type « Bloc-notes » ou « Notepad ».

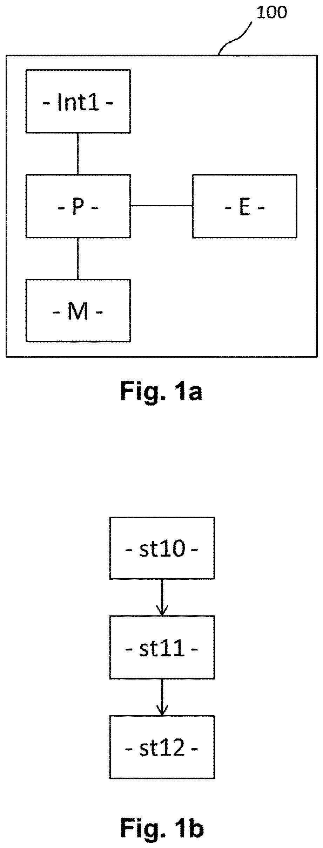

La figure 1a montre schématiquement un dispositif 100 de validation de communication selon un premier mode de réalisation de l'invention. La figure 1b montre un diagramme des étapes de fonctionnement du dispositif 100 de validation de communication selon le premier mode de réalisation de l'invention. Les figures 1 a et 1 b sont décrites conjointement.

Le dispositif 100 de validation de communication selon le premier mode de réalisation de l'invention comporte :
- un système M de stockage de données ;
- une première interface Int1 de communication ;
- un écran E d'affichage ;
- un processeur P connecté au système M de stockage de données, à la première interface Int1 de communication et à l'écran E d'affichage.

La première interface Int1 de communication est apte à recevoir des messages d'une part, et à transmettre des messages d'autre part. La première interface Int1 de communication peut, selon une première alternative, recevoir des messages grâce à une saisie d'un utilisateur. La première interface Int1 de communication peut, selon une deuxième alternative, recevoir des messages grâce à un réseau, tel qu'un réseau Ethernet. La première interface Int1 de communication peut, selon une troisième alternative, recevoir des messages grâce à une lecture dans un fichier.

Le processeur P du dispositif 100 de validation de communication selon le premier mode de réalisation de l'invention est configuré pour :
- selon une étape st10, acquérir un premier message dans un format binaire via la première interface Int1 de communication ;
- selon une étape st11, décoder le premier message dans le format binaire conformément à une norme dite « norme H », pour l'obtention d'un premier message décodé dans un format texte ;
- selon une étape st12, transmettre le premier message décodé dans le format texte à l'écran d'affichage.

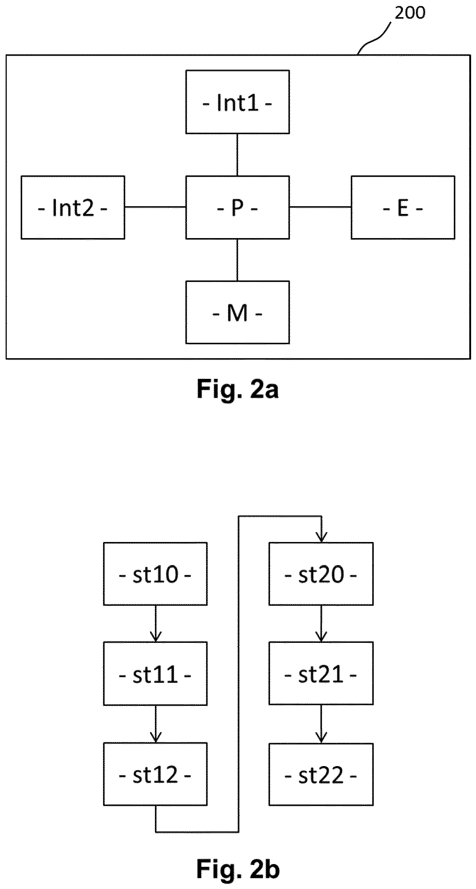

La figure 2a montre schématiquement un dispositif 200 de validation de communication selon un deuxième mode de réalisation de l'invention. Le dispositif 200 de validation de communication selon le deuxième mode de réalisation de l'invention comporte :
- le système M de stockage de données ;
- la première interface Int1 de communication ;
- une deuxième interface Int2 de saisie ;
- l'écran E d'affichage ;
- le processeur P.

Selon le deuxième mode de réalisation de l'invention, le processeur P est connecté au système M de stockage de données, à la première interface Int1 de communication, à l'écran E d'affichage et à la deuxième interface Int2 de saisie.

La figure 2b montre un diagramme des étapes d'un premier mode de fonctionnement du dispositif 200 de validation de communication selon le deuxième mode de réalisation de l'invention. Selon ce premier mode de fonctionnement, le processeur P est configuré pour :
- selon l'étape st10, acquérir un premier message dans un format binaire via la première interface Int1 de communication ;
- selon l'étape st11, décoder le premier message dans le format binaire conformément à une norme dite « norme H », pour l'obtention d'un premier message décodé dans un format texte ;
- selon l'étape st12, transmettre le premier message décodé dans le format texte à l'écran d'affichage ;
- selon une étape st20, acquérir un deuxième message dans le format texte via la deuxième interface Int2 de saisie ;
- selon une étape st21, comparer le deuxième message dans le format texte avec le premier message interprété dans le format texte ;
- selon une étape st22, transmettre un résultat de la comparaison à l'écran E d'affichage.

Dans le présent document, on entend par « résultat d'une comparaison entre deux messages » une information faisant apparaître toutes les différences entre lesdits messages. La comparaison est typiquement effectuée en choisissant l'un des deux messages comme référence, et en recherchant toutes les différences de l'autre message, dit message test, relativement au message référence. Une différence entre les deux messages peut également être comprise comme une désynchronisation entre les deux messages. Une différence ou désynchronisation entre deux messages est notamment :
- tout ajout dans le message test par rapport au message référence,
- toute suppression dans le message test par rapport au message référence,
- tout déplacement dans le message test par rapport au message référence.

Le premier mode de fonctionnement du dispositif 200 de validation de communication selon le deuxième mode de réalisation de l'invention, qui permet de comparer deux messages dans le format texte, correspond à une approche sémantique. On entend par « approche sémantique » une approche selon laquelle on s'intéresse à l'impact d'une éventuelle erreur ou modification dans l'implémentation d'un message dans un format binaire, sur le sens dudit message une fois interprété dans un format texte.

On décrit à présent, à titre d'exemple :
- un premier message décodé dans le format texte,
- un deuxième message dans le format texte acquis via la deuxième interface Int2 de saisie, et
- un résultat de la comparaison du deuxième message dans le format texte avec le premier message décodé dans le format texte.

Selon cet exemple, chaque message comporte une information de coordonnées géographiques, avec une latitude et une longitude.

Le premier message décodé dans le format texte est par exemple le suivant :

```
 <m> <coos>
          <lat> 43,36 </lat>
          <long> 43,36 </long>
   </coos>
   </m>
```

Le deuxième message dans le format texte acquis via la deuxième interface Int2 de saisie est par exemple le suivant :

```
 <m> <coos>
          <lat> 17,2 </lat>
          <long> 43,36 </long>
   </coos>
   </m>
```

Le résultat de la comparaison du deuxième message dans le format texte avec le premier message décodé dans le format texte est alors par exemple le suivant :

```
 <m> <coos>
          <lat> <s1> 43,6 </s1>
                <s2> 17,2 </s2>
          </lat>
          <long> 43,36 </long>
   </coos>
   </m>
```

On a donc produit un message de comparaison qui peut être utilisé pour obtenir un affichage intelligent permettant une visualisation rapide des différences.

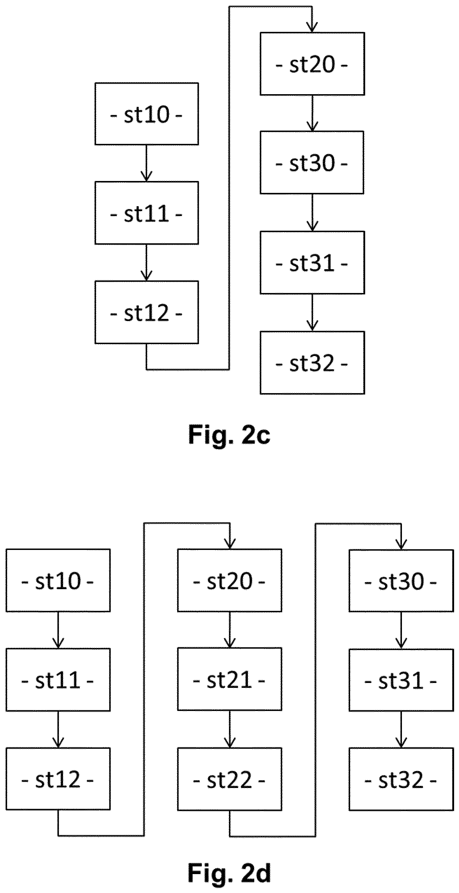

La figure 2c montre un diagramme des étapes d'un deuxième mode de fonctionnement du dispositif 200 de validation de communication selon le deuxième mode de réalisation de l'invention. Selon ce deuxième mode de fonctionnement, le processeur P est configuré pour :
- selon l'étape st10, acquérir un premier message dans un format binaire via la première interface Int1 de communication ;
- selon l'étape st11, décoder le premier message dans le format binaire conformément à une norme dite « norme H », pour l'obtention d'un premier message décodé dans un format texte ;
- selon l'étape st12, transmettre le premier message décodé dans le format texte à l'écran d'affichage ;
- selon l'étape st20, acquérir un deuxième message dans le format texte via la deuxième interface Int2 de saisie ;
- selon une étape st30, encoder le deuxième message dans le format texte selon le format binaire pour l'obtention d'un deuxième message dans le format binaire;
- selon une étape st31, comparer le premier message dans le format binaire avec le deuxième message dans le format binaire ;
- selon une étape st32, transmettre un résultat de la comparaison à l'écran E d'affichage.

De même que précédemment décrit, on entend par « résultat d'une comparaison entre un message test et un message référence » une information faisant apparaître toutes les différences entre lesdits messages, et notamment :
- tout ajout dans le message test par rapport au message référence,
- toute suppression dans le message test par rapport au message référence,
- tout déplacement dans le message test par rapport au message référence.

Le deuxième mode de fonctionnement du dispositif 200 de validation de communication selon le deuxième mode de réalisation de l'invention, qui permet de comparer deux messages dans le format binaire, correspond à une approche syntaxique. On entend par « approche syntaxique » une approche selon laquelle on s'intéresse à toute éventuelle erreur ou modification dans l'implémentation d'un message dans un format binaire, indépendamment de l'impact d'une telle erreur ou modification sur le sens dudit message une fois interprété dans un format texte.

La figure 2d montre un diagramme des étapes d'un troisième mode de fonctionnement du dispositif 200 de validation de communication selon le deuxième mode de réalisation de l'invention. Le troisième mode de fonctionnement compile les premier et deuxième modes de fonctionnement précédemment décrits. Ainsi, selon ce troisième mode de fonctionnement, le processeur P est configuré pour :
- selon l'étape st10, acquérir un premier message dans un format binaire via la première interface Int1 de communication ;
- selon l'étape st11, décoder le premier message dans le format binaire conformément à une norme dite « norme H », pour l'obtention d'un premier message décodé dans un format texte ;
- selon l'étape st12, transmettre le premier message décodé dans le format texte à l'écran d'affichage ;
- selon l'étape st20, acquérir un deuxième message dans le format texte via la deuxième interface Int2 de saisie ;
- selon l'étape st21, comparer le deuxième message dans le format texte avec le premier message interprété dans le format texte ;
- selon l'étape st22, transmettre un résultat de la comparaison à l'écran E d'affichage ;
- selon l'étape st30, encoder le deuxième message dans le format texte selon le format binaire pour l'obtention d'un deuxième message dans le format binaire;
- selon l'étape st31, comparer le premier message dans le format binaire avec le deuxième message dans le format binaire ;
- selon l'étape st32, transmettre un résultat de la comparaison à l'écran E d'affichage.

Le troisième mode de fonctionnement combine avantageusement les approches sémantique et syntaxique précédemment décrites.

## Revendications

1. Dispositif (100, 200) de validation de communication **caractérisé en ce qu'**il comporte :
- un système (M) de stockage de données ;
- une première interface (Int1) de communication ;
- un écran (E) d'affichage ;
- un processeur (P) connecté au système (M) de stockage de données, à la première interface (Int1) de communication et à l'écran (E) d'affichage, le processeur (P) étant configuré pour :
- acquérir (st10) un premier message dans un format binaire via la première interface (Int1) de communication ;
- décoder (st11) le premier message dans le format binaire conformément à une norme dite « norme H », pour l'obtention d'un premier message décodé dans un format texte ;
- transmettre (st12) le premier message décodé dans le format texte à l'écran (E) d'affichage.

2. Dispositif (200) de validation de communication selon la revendication 1 **caractérisé en ce qu'**il comporte une deuxième interface (Int2) de saisie, le processeur (P) étant connecté à la deuxième interface (Int2) de saisie et le processeur (P) étant configuré pour acquérir (st20) un deuxième message dans le format texte via la deuxième interface de saisie (Int2).

3. Dispositif (200) de validation de communication selon la revendication 2 **caractérisé en ce que** le processeur (P) est configuré pour :
- comparer (st21) le deuxième message dans le format texte avec le premier message interprété dans le format texte ;
- transmettre (st22) un résultat de la comparaison à l'écran (E) d'affichage.

4. Dispositif (200) de validation de communication selon l'une quelconque des revendications 2 ou 3 **caractérisé en ce que** le processeur (P) est configuré pour :
- encoder (st30) le deuxième message dans le format texte selon le format binaire pour l'obtention d'un deuxième message dans le format binaire;
- comparer (st31) le premier message dans le format binaire avec le deuxième message dans le format binaire ;
- transmettre (st32) un résultat de la comparaison à l'écran (E) d'affichage.
